# EUROPÄISCHE PATENTSCHRIFT

(11) **EP 4 121 385 B1**
(45) Veröffentlichungstag und Bekanntmachung des Hinweises auf die Patenterteilung: **27.03.2024**
(21) Anmeldenummer: 21731399.8
(22) Anmeldetag: 20.05.2021
(51) Int. Cl.: B66C 13/06, F16C 3/035, F16C 33/20

(54) **TELESKOPSTREBE FÜR EINE VORRICHTUNG ZUM HEBEN VON LASTEN**
TELESCOPIC STRUT FOR A DEVICE FOR LIFTING LOADS
MONTANT TÉLESCOPIQUE POUR UN DISPOSITIF DESTINÉ À SOULEVER DES CHARGES

(30) Priorität: 20.05.2020 DE 202020002227 U
(43) Veröffentlichungstag der Anmeldung: 25.01.2023
(73) Patentinhaber: Siemens Aktiengesellschaft, 80333 München (DE)
(72) Erfinder: FREYER, Hans Otto, 63452 Hanau (DE)
(74) Vertreter: Siemens Patent Attorneys
(86) Internationale Anmeldenummer: PCT/EP2021/063405
(87) Internationale Veröffentlichungsnummer: WO 2021/234066

(56) Entgegenhaltungen:
- EP-A2- 1 982 948
- WO-A1-2014/191561
- DE-A1-102004 045 516
- FR-A1- 2 759 687
- IT-A1- MO20 120 019

## Beschreibung

Die Erfindung betrifft eine Teleskopstrebe gemäß dem Oberbegriff des Patentanspruchs 1.

Zum Stabilisieren von fördertechnischen Baugruppen zum Heben und Senken von Lasten (sogenannte Hubwerke oder "Gehänge") werden häufig Teleskopstreben (kurz: Teleskope) eingesetzt. Dabei wird ein Innenrohr, das in einem Außenrohr verlagert ist, während der Hub- oder Senkbewegung ein- oder ausgefahren.

Die Druckschrift DE 10 2004 045 516 A1 - Aßmann "Vorrichtung zum Heben und Stabilisieren von Lasten" zeigt solche Teleskopstreben zur Stabilisierung in einer Vorrichtung zum Heben von Lasten. Die DE 10 2004 045 516 A1 offenbart eine Teleskopstrebe mit den Merkmalen gemäß dem Oberbegriff des unabhängigen Anspruchs 1.

Die IT MO 20120019A1 - Cosben "Braccio Telescopico" zeigt den äußeren Schuss eines Teleskoparm eines Krans mit mehrteiligen Führungselementen am Außenrohr, die eine schraubbasierte Verstelleinrichtung zwischen einem Gleitstück und einem Oberteil aufweisen.

Auch die WO 2014/191561 A1 und die EP 1 982 948 A2 zeigen Teleskop-Schüsse eines Krans mit einer solchen Konstruktion. Die FR 2 759 687 A1 zeigt stirnseitig in einen äußeren Schuss eines Kran-Teleskoparms eingelegte Führungselemente.

Bisher werden Teleskope, die zum Stabilisieren von fördertechnischen Baugruppen zum Heben und Senken von Lasten verwendet werden, mit Führungsrollen ausgeführt. Die Verlagerung des Innenrohrs im Außenrohr erfolgt dabei über mehrere, teilweise einstellbare Führungsrollen. Dabei sind die Führungsrollen beispielsweise am Außenrohr des Teleskops horizontal und vertikal angeordnet und dienen zum Führen des Innenrohrs. Jede Führungsrolle ist drehbar in Rollenböcken gelagert, diese sind wiederum am Außenrohr angeschweißt. Die Rollenlagerung soll dabei für eine möglichst leichtgängige, reibungsarme Bewegung sorgen und zugleich das Innenrohr möglichst spielarm im Außenrohr führen. Diese Lösung mit Rollen und darin verbauten Lagern (z.B. Kugellager) ist fertigungstechnisch aufwändig und damit teuer. Zudem ist der Austausch der Rollen im Falle eines Defektes bzw. bei Verschleißschäden zeitaufwändig und führt somit zu langen Stillstandszeiten der betroffenen Hubwerke. Überdies ist auch das Einstellen des Führungsspiels der Teleskopstreben bei der genannten rollenbasierten Lösung zeitaufwändig.

Es ist daher eine Aufgabe der vorliegenden Erfindung, eine konstruktiv einfache, funktionelle und wartungsarme Konstruktion für solche Teleskopstreben vorzuschlagen.

Es ist eine Kernidee der erfindungsgemäßen Lösung dieser Aufgabe, die Führung des Innenrohrs im Außenrohr der Teleskopstrebe mit einfach zu fertigenden Gleitschuhen zu bewerkstelligen. Diese Gleitschuhe werden zur einfachen Montage von außen in entsprechende Öffnungen im Außenrohr gesteckt und führen das Innenrohr. Sie sind vorzugsweise aus einem Werkstoff mit guten Gleiteigenschaften, z. B. Kunststoff, hergestellt.

Die Aufgabe wird durch die Teleskopstrebe nach Patentanspruch 1 gelöst.

Dabei wird eine Teleskopstrebe, geeignet für eine Stabilisierungseinrichtung für eine Vorrichtung zum Heben von Lasten, insbesondere für ein Gehänge für Fahrzeuge oder Fahrzeugteile, vorgeschlagen, wobei die Teleskopstrebe aus einem Außenrohr und einem darin geführten Innenrohr besteht, wobei das Innenrohr in dem Außenrohr in Längsrichtung verschiebbar geführt ist. Dabei ist an dem Außenrohr zur Führung des Innenrohrs eine Anzahl Gleitschuhe angebracht, wobei die Gleitschuhe von außen jeweils in eine Öffnung der Wand des Außenrohrs eingebracht sind und nach innen zur Führung des Innenrohrs vorstehen. Diese konstruktiv einfache und preisgünstig herzustellende Lösung verfügt über gute Gleiteigenschaften, weist ein geringes Führungsspiel auf und ist einfach einzustellen und zu warten.

Vorteilhafte Ausgestaltungen der erfindungsgemäßen Teleskopstrebe sind in den abhängigen Patentansprüchen angegeben.

Die dabei beschriebenen Merkmale und deren Vorteile können sowohl einzeln als auch in sinnvoller Kombination miteinander realisiert werden.

Vorteilhaft besteht das Innenrohr aus einem metallischen Werkstoff, und die Gleitschuhe bestehen im Wesentlichen aus Kunststoff. Gleitschuhe aus Kunststoff haben auf metallischen Oberflächen ein gutes Laufverhalten und eine niedrige Verschleißrate.

Ein geringes Kippspiel des Teleskops ergibt sich, wenn die Gleitschuhe in zwei beabstandeten Bereichen (Führungsbereiche) des Außenrohrs gruppiert sind und in jedem der Bereiche mindestens vier der Gleitschuhe ringförmig am Umfang des Außenrohrs verteilt angeordnet sind.

In einer besonders vorteilhaften Ausgestaltung weisen das Außenrohr und das Innenrohr jeweils einen im Wesentlichen rechteckförmigen Querschnitt auf, wobei in jedem der Bereiche an den breiten Seiten des Außenrohrs jeweils zwei Gleitschuhe nebeneinander angeordnet sind, und wobei an den schmalen Seiten jeweils ein Gleitschuh angeordnet ist.

Vorteilhaft weisen die Gleitschuhe zumindest in Schubrichtung an der Kontaktfläche zum Innenrohr eine Fase auf. Dies verbessert nicht nur das Laufverhalten, sondern erleichtert auch die Fügung des mit Gleitschuhen bestückten Außenrohrs mit dem Innenrohr, beispielsweise nach einer Demontage.

Erfindungsgemäß weisen die Gleitschuhe einen im Wesentlichen T-förmigen Querschnitt auf, wobei der kleinflächige Anteil des Gleitschuhs von außen durch die Öffnung des Außenrohrs geführt ist, und wobei ein überkragender, breiterer Teil des Gleitschuhs als Auflagefläche von außen am Rand der Öffnung an dem Außenrohr anliegt und im Bereich der Auflagefläche mit dem Außenrohr verbunden ist, vorzugsweise verschraubt. Somit können die Gleitschuhe jederzeit montiert oder ausgewechselt werden, auch dann, wenn das Innenrohr schon im Außenrohr eingeschoben ist. Zudem lässt sich so von außen das Führungsspiel einstellen. Dazu wird erfindungsgemäß zwischen der Außenseite des Außenrohrs und der Auflagefläche des Gleitschuhs jeweils ein Abstandshalter eingebracht, wobei je nach Dicke oder Anzahl der Abstandshalter der Gleitschuh mehr oder weniger tief in den Innenquerschnitt des Außenrohrs einragt und somit an die Abmessungen (z.B. Breite) des Innenrohrs exakt angepasst werden kann. Der Abstandshalter ist dabei zur Einstellung eines Führungsspiels der Teleskopstrebe und/oder zum Ausgleich eines Verschleißes des Gleitschuhs in einer vorteilhaften Ausführung auswechselbar. Alternativ können Stellschrauben, insbesondere Madenschrauben, in zusätzlichen Gewindelöchern der Gleitschuhe im Auflagebereich zur Einstellung der Eindringtiefe vorgesehen sein.

Als Abstandshalter ist vorteilhaft ein Blech oder eine Kunststoffplatte vorgesehen, die in einer vorteilhaften Variante von der Seite unter die Auflagefläche des Gleitschuhs eingeschoben wird. Vorteilhaft ist der Abstandshalter mit dem Gleitstück und dem Außenrohr verschraubt, wobei in einer besonders vorteilhaften Variante ein- und dieselben Schrauben sowohl den Gleitschuh an der Wandung des Außenrohrs befestigen als auch den Abstandshalter (Distanzplatte, "Futterblech") fixieren. Zu diesem Zweck weisen vorteilhaft der Abstandshalter und der Gleitschuh identische Bohrungen bzw. ein übereinstimmendes Bohrmuster auf, wobei die zur Befestigung des Gleitschuhs am Außenrohr eingesetzten Schrauben durch die Bohrungen des Abstandshalters geführt sind. In einer Variante weist der Abstandshalter keine Bohrungen, sondern zu einer Außenkante offene U-förmige Aussparungen für die Schrauben auf, so dass der Abstandshalter auch bei bereits montierten Schrauben unter die Auflagefläche des gelockerten Gleitschuhs seitlich eingeschoben werden kann. Zur Fixierung wird der Abstandhalter dann vorteilhaft zwischen der Auflagefläche des Gleitschuhs und dem Außenrohr eingeklemmt.

Ein Ausführungsbeispiel einer erfindungsgemäßen Teleskopstrebe wird nachfolgend anhand der Zeichnung erläutert.

Dabei zeigen:
- Figur 1: eine Schnittdarstellung einer erfindungsgemäßen Teleskopstrebe,
- Figur 2: zwei perspektivische Darstellungen (Unterseite, Oberseite) der Teleskopstrebe,
- Figur 3: eine Detaildarstellung eines Bereichs mit drei Gleitschuhen,
- Figur 4: eine Querschnittsdarstellung des Außenrohrs mit montierten Gleitschuhen,
- Figur 5: eine Querschnittsdarstellung des Außenrohrs mit montierten Gleitschuhen und dem Innenrohr.

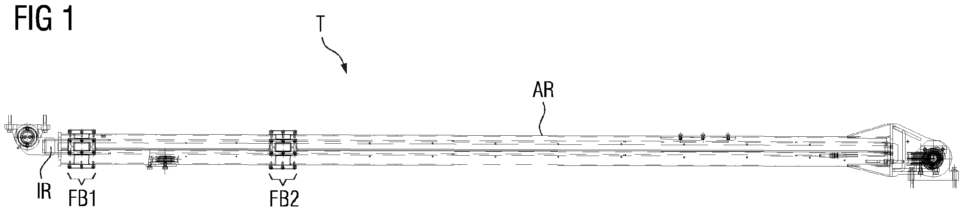

Die Figur 1 zeigt eine Mehrschnittdarstellung einer erfindungsgemäßen Teleskopstrebe T ("Teleskop") mit einem Außenrohr AR und einem Innenrohr IR, wobei Gleitschuhe in zwei Führungsbereichen FB1, FB2 ringförmig am Außenumfang des Außenrohrs AR angeordnet sind. Die Führungsbereiche FB1, FB2 sind ein Stück weit voneinander beabstandet, um ein Verkippen des Innenrohrs IR im Außenrohr AR zu verhindern. Gleichzeitig sind jedoch beide Führungsbereiche FB1, FB2 so nahe am offenen Ende des Außenrohrs AR angeordnet, dass auch bei fast vollständig ausgezogenem Innenrohr IR dieses in beiden Führungsbereichen FB1, FB2 geführt ist und somit weiterhin eine sichere, kippfreie Führung gewährleistet ist.

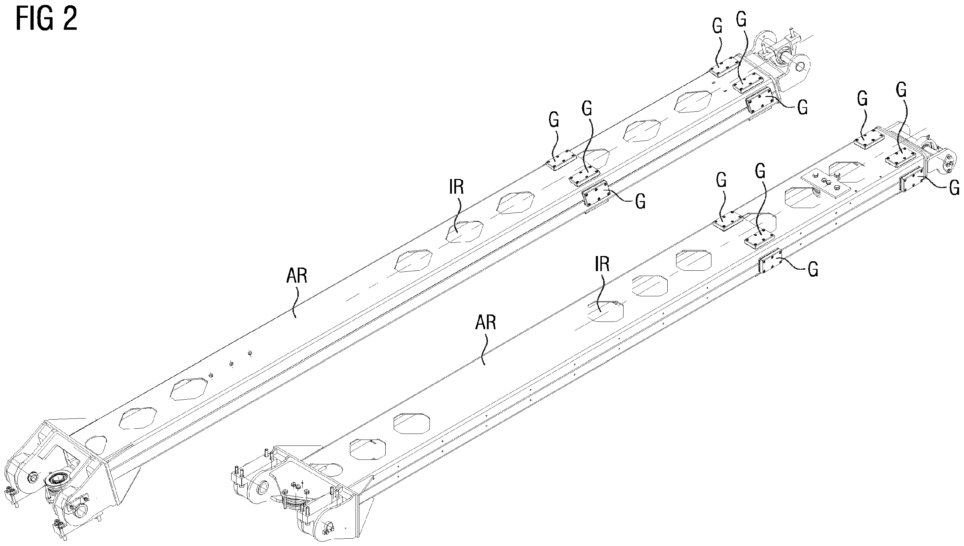

Die Figur 2 zeigt die erfindungsgemäße Teleskopstrebe in perspektivischer Darstellung, einmal von einer ersten, oberen Seite, und einmal von einer zweiten, unteren Seite. Die bereits mit der Figur 1 eingeführten Bezugszeichen gelten auch für die Figur 2 und alle nachfolgenden Figuren. Zusätzlich zu der Darstellung aus der Figur 1 sind in der Figur 2 die Gleitschuhe G dargestellt, die jeweils mit 6 Schrauben in der Wandung des Außenrohrs AR von außen befestigt sind. Im Gegensatz zu der Figur 1, bei der das Innenrohr IR bezogen auf die Darstellung von der linken Seite in das Außenrohr AR eingeschoben ist, ist das Innenrohr IR in der Figur 2 am rechtsseitigen Ende des Außenrohrs AR eingeschoben. Entsprechend befinden sich in der Figur 2 die Führungsbereiche FB1, FB2 mit den Gleitschuhen G am rechtsseitigen, offenen Ende des Außenrohrs AR.

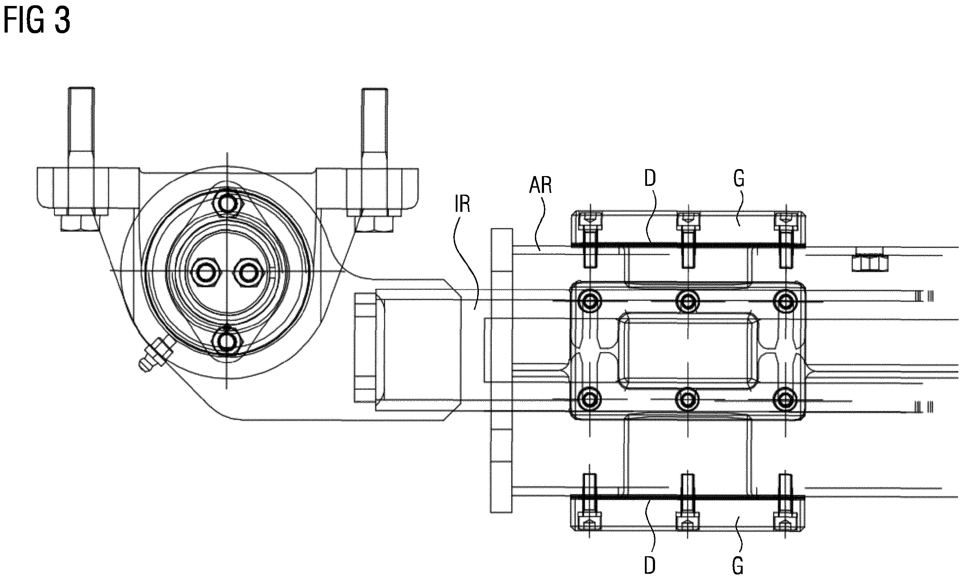

Die Figur 3 zeigt eine Detaildarstellung der montierten Gleitschuhe G in der Nähe des offenen Endes des Außenrohrs AR. Dabei ist der im Wesentlichen T-förmige Querschnitt der Gleitschuhe G zu erkennen, wobei die 6 Schrauben, mit der jeder Gleitschuh G befestigt ist, in einem überkragenden Bereich, der von außen am Außenrohr AR anliegt, verschraubt ist, und wobei ein kleinerer, zylinder- oder rechteckförmig angeformter Teil des Gleitschuhs G durch eine entsprechende Öffnung des Außenrohrs AR jeweils in den Innenbereich des Außenrohrs AR hineinragt und mit der Unterseite das Innenrohr IR führt. In der Figur 3 sind auch Abstandshalter D (Distanzstücke, "Futterbleche") gezeigt, die durch ihre Dicke definieren, wie tief der Gleitschuh G jeweils in den Innenbereich des Außenrohrs AR eindringt.

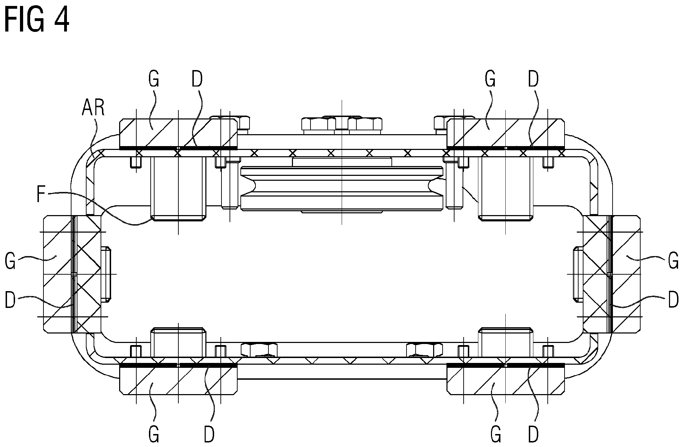

In der Figur 4 ist eine Querschnittsdarstellung quer zur Längsrichtung des Außenrohrs AR im Bereich der montierten Gleitschuhe G gezeigt. Das Innenrohr ist in dieser Darstellung nicht dargestellt. Hier ist zu sehen, dass die Gleitschuhe G im Bereich ihrer Gleitfläche rundherum mit einer Fase F angefast sind. Ansonsten sind die Führungsflächen der Gleitschuhe G, also die Kontaktflächen zum Innenrohr IR, in diesem Ausführungsbeispiel im Wesentlichen glatt ausgeführt. In anderen Varianten, bei denen zusätzlich ein Schmiermittel (bevorzugt auf PTFE-Basis) eingesetzt wird, kann die Gleitfläche auch eine Textur aufweisen, in deren Vertiefungen das Schmiermittel anhaften kann.

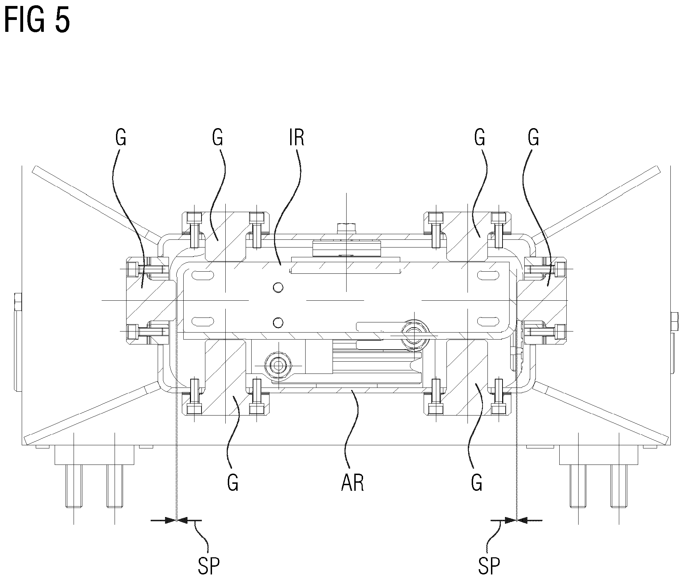

Die Figur 5 zeigt ebenfalls eine Querschnittdarstellung des Außenrohrs AR im Bereich von sechs montierten Gleitschuhen G, wobei in dieser Darstellung auch das Innenrohr IR dargestellt ist. An den Gleitschuhen G der Schmalseiten des Außenrohrs AR ist ein Führungsspiel SP (Spiel) eingezeichnet. Dieses wird eingestellt, indem mehr oder minder dicke Abstandshalter D zur Auffütterung der Auflageflächen des Außenrohrs AR im Bereich der Anlageflächen des Gleitschuhs G eingebracht werden.

Als Werkstoff für die Gleitschuhe hat sich ein Kunststoff, insbesondere auf Basis einen reinen, ultrahochmolekularen Niederdruckpolyethylens, im Zusammenspiel mit einem Innenrohr IR aus Metall bewährt.

Die hier vorgeschlagenen Gleitschuhe sind einfach zu fertigen, beispielsweise durch spanende Bearbeitung. Dadurch, dass auf eine Rollenkonstruktion mit Rollenböcken verzichtet werden kann, wird ein Schweißverzug des Außenrohrs bei der Herstellung reduziert. Daraus folgt, dass das Außenrohr genauer zu fertigen ist und preiswerter in der Herstellung ist. Die hier vorgeschlagene Konstruktion führt dazu, dass die Gleitschuhe einfach eingestellt bzw. justiert werden können und auch einfach ausgetauscht werden können.

## Patentansprüche

1. Teleskopstrebe (T) für eine Stabilisierungseinrichtung für eine Vorrichtung zum Heben von Lasten, insbesondere für ein Gehänge für Fahrzeuge oder Fahrzeugteile, wobei die Teleskopstrebe (T)aus einem Außenrohr (AR) und einem darin geführten Innenrohr (IR) besteht,
wobei das Innenrohr (IR) in dem Außenrohr (AR) in Längsrichtung verschiebbar ist,
wobei an dem Außenrohr (AR) zur Führung des Innenrohrs (IR) eine Anzahl Gleitschuhe (G) angebracht ist, wobei die Gleitschuhe (G) von außen jeweils in eine Öffnung der Wand des Außenrohrs (AR) eingebracht sind und nach innen zur Führung des Innenrohrs (IR) vorstehen,
**dadurch gekennzeichnet,**
**dass** die Gleitschuhe (G) einen im Wesentlichen T-förmigen Querschnitt aufweisen, wobei der kleinflächige Anteil des Gleitschuhs (G) von außen durch die Öffnung des Außenrohrs (AR) geführt ist, und wobei ein überkragender, breiter Teil des Gleitschuhs (G) als Auflagefläche von außen an dem Außenrohr (AR) anliegt und im Bereich der Auflagefläche mit dem Außenrohr (AR) verbunden, insbesondere verschraubt, ist, und
**dass** zwischen der Außenseite des Außenrohrs (AR) und der Auflagefläche des Gleitschuhs (G) jeweils ein Abstandshalter (D) eingebracht ist.

2. Teleskopstrebe (T) nach Patentanspruch 1,
**dadurch gekennzeichnet,**
**dass** das Innenrohr (IR) aus einem metallischen Werkstoff besteht und die Gleitschuhe (G) im Wesentlichen aus Kunststoff bestehen.

3. Teleskopstrebe nach einem der vorhergehenden Patentansprüche,
**dadurch gekennzeichnet,**
**dass** die Gleitschuhe (G) in zwei beabstandeten Bereichen (FB1, FB2) des Außenrohrs (AR)gruppiert sind und in jedem der Bereiche mindestens vier der Gleitschuhe (G) ringförmig am Umfang des Außenrohrs (AR) verteilt angeordnet sind.

4. Teleskopstrebe (T) nach Patentanspruch 3,
**dadurch gekennzeichnet,**
**dass** das Außenrohr (AR) und das Innenrohr (IR) jeweils einen im Wesentlichen rechteckförmigen Querschnitt aufweisen, wobei in jedem der Bereiche an den breiten Seiten des Außenrohrs (AR) jeweils zwei Gleitschuhe (G) nebeneinander angeordnet sind, und wobei an den schmalen Seiten jeweils ein Gleitschuh (G) angeordnet ist.

5. Teleskopstrebe (T) nach einem der vorhergehenden Patentansprüche,
**dadurch gekennzeichnet,**
**dass** die Gleitschuhe (G) zumindest in Schubrichtung an der Kontaktfläche zum Innenrohr (IR) eine Fase (F) aufweisen.

6. Teleskopstrebe (T) nach einem der vorhergehenden Patentansprüche,
**dadurch gekennzeichnet,**
**dass** der Abstandshalter (D) zur Einstellung eines Führungsspiels (SP) der Teleskopstrebe (T) und/oder zum Ausgleich eines Verschleißes des Gleitschuhs (G) auswechselbar ist.

7. Teleskopstrebe (T) nach einem der vorhergehenden Patentansprüche,
**dadurch gekennzeichnet,**
**dass** als Abstandshalter (D) ein Blech oder eine Kunststoffplatte vorgesehen ist.

8. Teleskopstrebe (T) nach einem der vorhergehenden Patentansprüche,
**dadurch gekennzeichnet,**
**dass** der Abstandshalter (D) mit dem Gleitstück (G) und dem Außenrohr (AR) verschraubt ist.

9. Teleskopstrebe (T) nach Patentanspruch 8,
**dadurch gekennzeichnet,**
**dass** der Abstandshalter (D) und der Gleitschuh (G) deckungsgleiche Bohrungen aufweisen und die zur Befestigung des Gleitschuhs am Außenrohr (AR) eingesetzten Schrauben durch die Bohrungen des Abstandshalters (D) geführt sind.

10. Teleskopstrebe (T) nach einem der vorhergehenden Patentansprüche,
**dadurch gekennzeichnet,**
**dass** der Abstandshalter (D) zwischen der Auflagefläche des Gleitschuhs (G) und dem Außenrohr (AR) eingeklemmt ist.

## Claims

1. Telescopic strut (T) for a stabilizing means for a device for lifting loads, in particular for a hanger for vehicles or vehicle parts,
wherein the telescopic strut (T) is composed of an outer tube (AR) and of an inner tube (IR) guided in said outer tube,
wherein the inner tube (IR) is movable in a longitudinal direction in the outer tube (AR),
wherein a number of sliding shoes (G) is attached to the outer tube (AR) for the purposes of guiding the inner tube (IR),
wherein the sliding shoes (G) have each been introduced from the outside into an opening in the wall of the outer tube (AR) and protrude inwardly for the purposes of guiding the inner tube (IR),
**characterized**
**in that** the sliding shoes (G) have a substantially T-shaped cross section, wherein the small-area part of the sliding shoe (G) is led through the opening of the outer tube (AR) from the outside, and wherein an overhanging wide part of the sliding shoe (G), as a bearing surface, bears against the outer tube (AR) from the outside and is connected, in particular screwed, to the outer tube (AR) in the region of the bearing surface, and
**in that** a spacer (D) is introduced in each case between the outer side of the outer tube (AR) and the bearing surface of the sliding shoe (G).

2. Telescopic strut (T) according to Patent Claim 1, **characterized**
**in that** the inner tube (IR) is composed of a metallic material and the sliding shoes (G) are composed substantially of plastic.

3. Telescopic strut according to either one of the preceding patent claims,
**characterized**
**in that** the sliding shoes (G) are grouped into two spacedapart regions (FB1, FB2) of the outer tube (AR) and, in each of the regions, at least four of the sliding shoes (G) are arranged so as to be distributed annularly around the periphery of the outer tube (AR).

4. Telescopic strut (T) according to Patent Claim 3, **characterized**
**in that** the outer tube (AR) and the inner tube (IR) each have a substantially rectangular cross section, wherein, in each of the regions, two sliding shoes (G) are arranged adjacent to one another at each of the wide sides of the outer tube (AR), and wherein one sliding shoe (G) is arranged at each of the narrow sides.

5. Telescopic strut (T) according to any one of the preceding patent claims,
**characterized**
**in that** the sliding shoes (G) have a bevel (F) at least in a sliding direction at the contact surface with respect to the inner tube (IR).

6. Telescopic strut (T) according to any one of the preceding patent claims,
**characterized**
**in that** the spacer (D) is exchangeable for the purposes of setting a guide clearance (SP) of the telescopic strut (T) and/or for the purposes of compensating for wear of the sliding shoe (G).

7. Telescopic strut (T) according to any one of the preceding patent claims,
**characterized**
**in that** a metal sheet or a plastics plate is provided as a spacer (D).

8. Telescopic strut (T) according to any one of the preceding patent claims,
**characterized**
**in that** the spacer (D) is screwed to the sliding piece (G) and to the outer tube (AR).

9. Telescopic strut (T) according to Patent Claim 8, **characterized**
**in that** the spacer (D) and the sliding shoe (G) have congruent bores, and the screws used for fastening the sliding shoe to the outer tube (AR) are led through the bores of the spacer (D).

10. Telescopic strut (T) according to any one of the preceding patent claims,
**characterized**
**in that** the spacer (D) is clamped between the bearing surface of the sliding shoe (G) and the outer tube (AR).

## Revendications

1. Montant (T) télescopique d'un dispositif de stabilisation d'une installation pour soulever des charges, en particulier pour une suspension de véhicules ou de parties de véhicule,
dans lequel le montant (T) télescopique est constitué d'un tube (AR) extérieur et d'un tube (IR) intérieur, qui y est guidé,
dans lequel le tube (IR) intérieur peut coulisser dans la direction longitudinale dans le tube (AR) extérieur,
dans lequel sur le tube (AR) extérieur un certain nombre de patins (G) est monté pour le guidage du tube (IR) intérieur,
dans lequel les patins (G) sont insérés de l'extérieur respectivement dans une ouverture de la paroi du tube (AR) extérieur et sont en saillie vers l'intérieur pour le guidage du tube (IR) intérieur,
**caractérisé**
**en ce que** les patins (G) ont une section transversale sensiblement en forme de T,
dans lequel la partie de petite surface du patin (G) est guidée de l'extérieur dans l'ouverture du tube (AR) extérieur et, dans lequel une partie large en porte à faux du patin (G) s'applique comme surface d'appui de l'extérieur au tube (AR) extérieur et est reliée au tube (AR) extérieur dans la région de la surface d'appui, en y étant en particulier vissée, et
respectivement une entretoise (D) est insérée entre la face extérieure du tube (AR) et la surface d'appui du patin (G).

2. Montant (T) télescopique suivant la revendication 1, **caractérisé**
**en ce que** le tube (IR) intérieur est en un matériau métallique et le patin (G) est essentiellement en matière plastique.

3. Montant téléscopique suivant l'une des revendications précédentes,
**caractérisé**
**en ce que** les patins (G) sont regroupés dans deux régions (FB1, FB2) à distance l'une de l'autre du tube (AR) extérieur et dans chacune des régions au moins quatre des patins (G) sont répartis annulairement sur le pourtour du tube (AR) extérieur.

4. Montant (T) téléscopique suivant la revendication 3, **caractérisé**
**en ce que** le tube (AR) extérieur et le tube (IR) intérieur ont chacun une section transversale sensiblement rectangulaire, dans lequel dans chacune des régions sur les grands côtés du tube (AR) extérieur respectivement deux patins (G) sont montés l'un à côté de l'autre, dans lequel sur les petits côtés est monté respectivement un patin (G).

5. Montant (T) téléscopique suivant l'une des revendications précédentes,
**caractérisé**
**en ce que** les patins (G) ont, au moins dans le sens de poussée sur les surfaces de contact avec le tube (IR) intérieur, un biseau (F).

6. Montant (T) téléscopique suivant l'une des revendications précédentes,
**caractérisé**
**en ce que** l'entretoise (D) est remplaçable pour le réglage d'un jeu (SP) de guidage du montant (T) téléscopique et/ou pour la compensation d'une usure du patin (G).

7. Montant (T) téléscopique suivant l'une des revendications précédentes,
**caractérisé**
**en ce qu'**il est prévu comme entretoise (D) une tôle ou une plaque en matière plastique.

8. Montant (T) téléscopique suivant l'une des revendications précédentes,
**caractérisé**
**en ce que** l'entretoise (D) est vissée au patin (G) et au tube (AR) extérieur.

9. Montant (T) téléscopique suivant la revendication 8, **caractérisé**
**en ce que** l'entretoise (D) et le patin (G) ont des trous à recouvrement et les vis insérées pour la fixation du patin au tube (AR) extérieur sont guidées par les trous de l'entretoise (D).

10. Montant (T) téléscopique suivant l'une des revendications précédentes,
**caractérisé**
**en ce que** l'entretoise (D) est collée entre la surface d'appui du patin (G) et le tube (AR) extérieur.
